# EUROPÄISCHE PATENTSCHRIFT

(11) **EP 1 716 037 B1**
(45) Veröffentlichungstag und Bekanntmachung des Hinweises auf die Patenterteilung: **02.04.2008**
(21) Anmeldenummer: 05707995.6
(22) Anmeldetag: 10.02.2005
(51) Int. Cl.: B62D 5/09

(54) **HYDRAULISCHE SERVOLENKUNG**
HYDRAULIC POWER ASSISTED STEERING SYSTEM
DIRECTION ASSISTEE HYDRAULIQUE

(30) Priorität: 18.02.2004 DE 102004007833
(43) Veröffentlichungstag der Anmeldung: 02.11.2006
(73) Patentinhaber: ZF Lenksysteme GmbH, 73527 Schwäbisch Gmünd (DE)
(72) Erfinder: KOGEL, Walter, 73453 Abtsgmünd (DE); HÄGELE, Michael, 73432 Aalen (DE); HEINTSCHEL, Manfred, 73525 Schwäbisch Gmünd (DE)
(86) Internationale Anmeldenummer: PCT/EP2005/050592
(87) Internationale Veröffentlichungsnummer: WO 2005/080178

(56) Entgegenhaltungen:
- EP-A- 0 931 714
- EP-A- 1 375 303
- DE-A1- 4 130 989
- DE-A1- 10 159 704
- DE-C1- 19 541 749
- GB-A- 2 328 191

## Beschreibung

### Technisches Umfeld

Die Erfindung betrifft eine hydraulische Servolenkung für ein Fahrzeug, insbesondere eine elektrohydraulische Servolenkung für ein Kraftfahrzeug nach dem Oberbegriff des Anspruchs 1.

Hydraulische oder elektrohydraulische Servolenkungen für Kraftfahrzeuge mit einem als Drehschieberanordnung ausgebildeten Servoventil, dessen zueinander drehbewegliche Steuerteile - Drehschieberbuchse und Drehschieber - miteinander durch ein Torsionselement, das die Steuerteile in eine Normallage relativ zueinander stellt, antriebsgekoppelt sind, und mit einem Lenkgetriebe, welches zur Antriebsübertragung zwischen einem der Steuerteile und gelenkten Fahrzeugrädern angeordnet und direkt oder indirekt mit einem vom Servoventil gesteuerten hydraulische Servozylinder antriebsverbunden ist, sind bekannt.

Eine Kolbenstange des Servozylinders ist über Spurstangen und Radlenkhebel in bekannter Weise mit einem oder mehreren lenkbaren Rädern des Fahrzeugs verbunden. Zu der Kolbenstange des Servozylinders ist eine Zahnstange, auf der ein Ritzel eines elektrischen Servomotors oder ein Ritzel einer mechanischen Lenkwellenverbindung zu einer Lenkhandhabe kämmt, in Reihe geschaltet (vgl. DE 195 41749 C1 oder EP 0708 011 A2).

Durch die Reihenschaltung der Kolbenstange und der Zahnstange ergibt sich eine große Baulänge eines Aktuators für eine elektrohydraulische Servolenkung. Dadurch sind nur relativ kurze Spurstangen möglich, die zu einer ungünstigen Kinematik einer Achse, zu großen Spreiz- und Pfeilungswinkeln der Spurstangen und zu einer insbesondere bei Nutzkraftwagen hohen Belastung einer elektrohydraulischen Servolenkung und deren Aktuator führen. Zudem sind solche elektrohydraulischen Servolenkungen in ihrer Lenkleistung auf das jeweilige Fahrzeug, in dem sie eingesetzt sind, ausgelegt und weniger flexibel anwendbar.
Eine lenkung mit den Merkmalen aus der Präambel von Anspruch 1 ist beispielsweise durch die EP 1375303 bekannt.

### Offenbarung der Erfindung

### Technisches Problem

Der Erfindung liegt die Aufgabe zugrunde, eine möglichst im Bereich ihres Aktuators, kleinbauende, elektrohydraulische Servolenkung zu schaffen, die für verschiedene Fahrzeugklassen geeignet ist.

### Technische Lösung

Die Aufgabe wird mit einer elektrohydraulischen Servolenkung mit den Merkmalen des Anspruchs 1 gelöst.

Eine insbesondere für ein Nutzkraftfahrzeug geeignete elektrohydraulische Servolenkung, deren Aktuator kurz baut und an verschiedenen Leistungs- oder Gewichtsklassen von Fahrzeugen modulartig anpassbar ist, wird dadurch geschaffen, dass die Kolbenstange des Servozylinders und die von dem elektrischen Servomotor axial verschobene Stange oder Zahnstange parallel zueinander angeordnet wird und die Stange oder Zahnstange und die Kolbenstange auf ein Additionsglied wirken, welches wiederum mit dem lenkbaren Rad wirkverbunden ist. Die Stange des elektrischen Servomotors und die Kolbenstange wirken gleichzeitig und gleichsinnig auf das Additionsglied.

Bevorzugte Ausführungen ergeben sich aus den Unteransprüchen.

Die Stange und die Kolbenstange können gelenkig mit dem Additionsglied verbunden sein. Die Stange oder Zahnstange ist jedoch bevorzugt fest mit dem Additionsglied verbunden. Die Kolbenstange ist bevorzugt ebenso fest mit dem Additionsglied verbunden, wodurch die Stange, angetrieben von dem elektrischen Servomotor und die Kolbenstange eine Axialbewegung ausführen und das als Joch ausgebildete Additionsglied linear verschoben wird.

Es können unterschiedliche Anordnungen des elektrischen Servomotors mit der Stange, des Servoventils, des Servozylinders und deren Wirkungsverbindung untereinander zweckmäßig sein. So wirkt in einer ersten, bevorzugten Ausführungsform der elektrische Servomotor über ein Untersetzungsgetriebe auf ein Steuerteil, insbesondere einen Drehschieber des Servoventils. Das Steuerteil ist wiederum drehbar mit einem Abtriebsglied, wie etwa einem Zahnrad, das mit einer Kugelumlaufmutter oder einem Ritzel das mit einer Zahnstange kämmt, wirkverbunden. Die Kugelumlaufmutter bewirkt in bekannter Weise bei deren Rotation eine Axialverschiebung der als Spindel ausgeführten Stange, welche wiederum auf das Additionsglied wirkt.

Es kann zweckmäßig sein, das Steuerteil des Servoventils nicht durch den elektrischen Servomotor, sondern mechanisch von einer Lenkwelle mit einer Lenkhandhabe zu verdrehen, um den Servozylinder zu betätigen.

### Kurze Beschreibung von Zeichnungen

Die Erfindung wird nun näher anhand eines Ausführungsbeispieles beschrieben und anhand der beiliegenden Zeichnung wiedergegeben.

Fig. 1 zeigt einen schematischen Längsschnitt eines Aktuators einer ersten elektrohydraulischen Servolenkung,

Fig. 2 zeigt einen weiteren Längsschnitt durch einen Aktuator einer elektrohydraulischen Servolenkung,

Fig. 3 zeigt einen weiteren Längsschnitt durch einen Aktuator einer elektrohydraulischen Servolenkung,

Fig. 4 zeigt einen schematischen Längsschnitt durch eine elektrohydraulische Servolenkung in der Art einer Double-Pinion-Lenkung,

Fig. 5 zeigt einen schematischen Längsschnitt durch eine als Überlagerungslenkung ausgebildete elektrohydraulische Servolenkung.

**Tabelle 2**

| | |
|---|---|
| 1 | Hydraulische Servolenkung |
| 2 | Servoventil |
| 3 | Kolbenstange |
| 4 | Servozylinder |
| 5 | Rad |
| 6 | Servomotor, elektrisch |
| 7 | Stange |
| 8 | Additionsglied |
| 9 | Getriebe |
| 10 | Steuerteil |
| 11 | Abtriebsglied |
| 12 | Zahnrad |
| 13 | Lenkmutter |
| 14 | Kugelumlaufmutter |
| 15 | Ritzel |
| 16 | Lenkwelle |
| 17 | Überlagerungsgetriebe |
| 18 | Getriebe |
| 19 | Linearer Radaktuator |
| 20 | Drehschieber |
| 21 | Drehschieberbuchse |
| 22 | Ende |
| 23,23' | Arbeitsraum |
| 24 | Loch |
| β | Lenkwinkel |

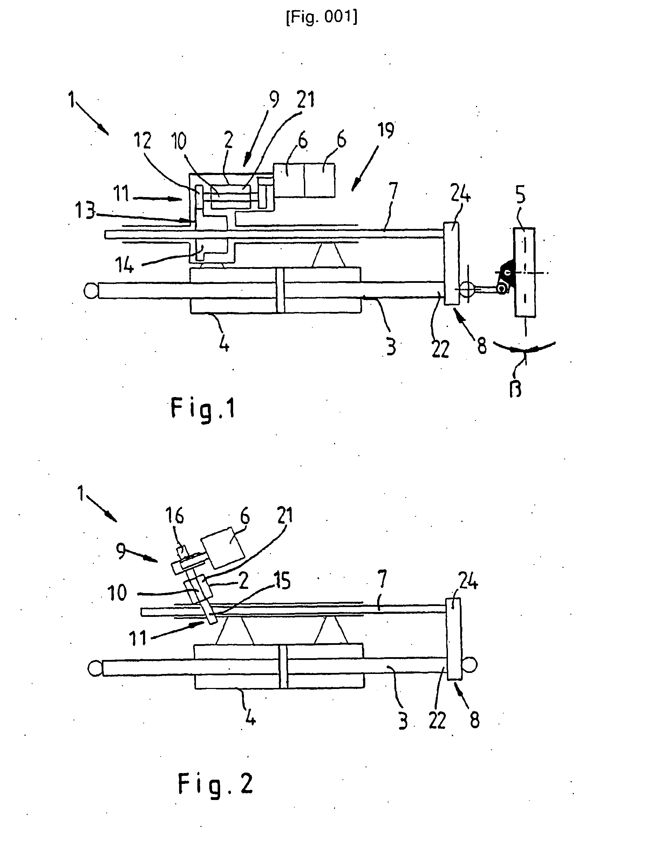

In Figur 1 ist in einem schematischen Längsschnitt ein Linear-Radaktuator 19 einer hydraulischen Servolenkung 1 mit einer elektromotorischen Unterstützung der Stellkraft eines Servozylinders 4 gezeigt. Zwei in Reihe geschaltete elektrische Servomotoren 6 treiben über ein Getriebe 9 ein als Drehschieber ausgebildetes Steuerteil 10 eines Servoventils 2 an, welches in einer gleichachsigen Drehschieberbuchse 21 gelagert ist. Das Servoventil 2 ist mit einem nicht gezeigten Druckmittelbehälter und einer hydraulischen Pumpe verbunden, wobei der Druckmittelbehälter in an sich bekannter Weise mit einem Niederdruckanschluß und die hydraulische Pumpe mit einem Hochdruckanschluß verbunden ist. Ein erster Arbeitsraum 23 und ein zweiter Arbeitsraum 23' des Servozylinders 4 ist mit nicht gezeigten Anschlüssen des Servoventils 2 fluidisch verbunden und wird jeweils abwechselnd mit Druckmittel zur Verschiebung einer doppelt wirkenden Kolben-Kolbenstangenanordnung in dem Servozylinder 4 beaufschlagt. Das Servoventil 2 hat eine offene Mitte, d.h. alle Anschlüsse kommunizieren mit einander, wenn das Steuerteil 10 relativ zu der Drehschieberbuchse 21 eine Mittellage zueinander einnehmen. Das Steuerteil 10 und die Drehschieberbuchse 21 sind miteinander durch einen in einer Axialbohrung der Teile angeordneten Drehstab verbunden, welcher das Steuerteil 10 und die Drehschieberbuchse 21 in ihrer Mittelstellung relativ zueinander zu halten versucht.

Das Steuerteil 10 trägt ein als Zahnrad 12 ausgebildetes Abtriebsglied 11, das als Lenkmutter 13 oder als Kugelumlaufmutter 14 ausgebildet ist und um die Stange 7 rotiert und diese antreibt. Ein Additionsglied 8 ist an einem Ende der Stange 7 festgelegt und ist zudem mit einem Ende 22 der Kolbenstange 3 fest verbunden, sodaß die elektrischen Servomotoren 6 sowohl das Servoventil 2 zur Betätigung des Servozylinders 4 als auch über die Kugelumlaufmutter 14 die Stange 7 antreiben. Das Additionsglied 8 verbindet die Stange 7 und die Kolbenstange 3 in den in den Figuren 1 bis 5 gezeigten Ausführungsbeispielen rechtwinklig miteinander. Die Stange 7 und die Kolbenstange 3 sind parallel zueinander und ohne Längsversatz angeordnet und wirken gemeinsam auf das beide fest verbindende, als Joch 24 ausgebildete Additionsglied 8. Durch die Parallelanordnung der Stange 7 mit dem Servozylinder 4 ist eine kurze Bauform des Radaktuators 19 und der elektrohydraulischen Servolenkung 1 gegeben.

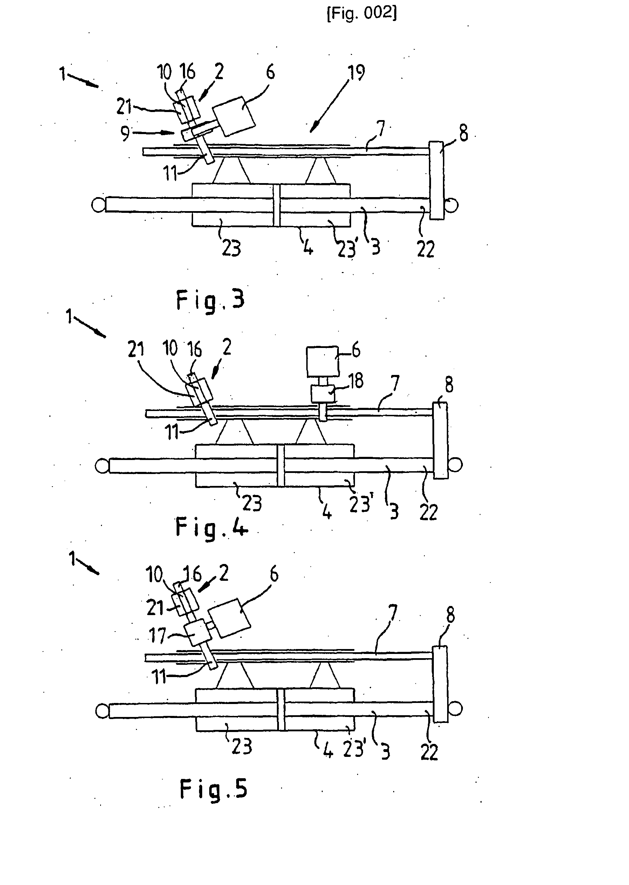

Die in den Figuren 2 und 3 in einem schematischen Längsschnitt gezeigten elektrohydraulischen Servolenkungen weisen eine identische Anordnung und Koppelung der Stange 7 und der Kolbenstange 3 mit dem Additionsglied 8 auf. Der elektrische Servomotor 6 treibt über ein Getriebe 9 das Steuerteil 10 welches wiederum mit einem Abtriebsglied 11 auf die Stange 7 zu deren Axialverschiebung wirkt, an (vgl. Fig.2). Mit dem Steuerteil 10 ist eine Lenkwelle 16 drehfest verbunden. In Fig. 3 treibt die Lenkwelle 16 das Steuerteil 10 des Servoventils 2, welches über ein als Ritzel 15 ausgebildetes Abtriebsglied 11 auf die Stange 7 wirkt. Zwischen dem Steuerteil 10 und dem Abtriebsglied 11 ist ein Übersetzungsgetriebe 9 mit dem elektrischen Servomotor 6 angeordnet, welcher auf das Abtriebsglied 11 wirkt.

In den Figuren 4 und 5 sind schematische Längsschnitte durch eine elektrohydraulische Servolenkung dargestellt. In Fig. 4 wirkt der elektrische Servomotor 6 über ein Getriebe 18 auf die Stange 7 während das Servoventil 2 und dessen Steuerteil 10 mit der Lenkwelle 16 drehfest verbunden sind und mit dem Abtriebsglied 11 auf die Stange 7 wirkt (Double-Pinion-Lenkung).

In Fig. 5 wirkt der elektrische Servomotor 6 über ein Überlagerungsgetriebe 17 zwischen dem Servoventil 2 und dem Abtriebsglied 11 auf das Abtriebsglied und die Stange.

## Patentansprüche

1. Hydraulische Servolenkung für ein Fahrzeug, insbesondere elektrohydraulische Servolenkung für ein Kraftfahrzeug, mit einem Servoventil (2) dessen Relativbewegung seiner Steuerteile eine Kolbenstange (3) eines Servozylinders (4) betätigt und zumindest einen Lenkwinkel (β) eines mit der Kolbenstange (3) wirkverbundene Rades (5) verändert, und mit einem elektrischen Servomotor (6) der eine Stange (7) zur gleichsinnigen Lenkwinkelverstellung des Rades (5) mit dem Servozylinder (4) antreibt, dad urch **gekennzeichnet**, dass eine Lenkwelle (16) auf ein Steuerteil (10) des Servoventils (2) wirkt und das Servoventil (2) mit einem Abtriebsglied (11) auf die Stange (7) wirkt, wobei die Stange (7) und die Kolbenstange (3) des Servozylinders (4) in paralleler Anordnung zueinander auf ein Additionsglied (8) zur gemeinsamen Lenkwinkelverstellung des Rades (5) wirken.

2. Hydraulische Servolenkung nach Anspruch 1, **dadurch gekennzeichnet, dass** die Stange (7) und die Kolbenstange (3) fest oder gelenkig mit dem Additionsglied (8) verbunden sind.

3. Hydraulische Servolenkung nach einem der Ansprüche 1 oder 2, **dadurch gekennzeichnet, dass** der elektrische Servomotor (6) über ein Getriebe (9) auf ein Steuerteil (10) des Servoventils (2) wirkt.

4. Hydraulische Servolenkung nach Anspruch 3, **dadurch gekennzeichnet, dass** das Steuerteil (10) mit einem Abtriebsglied (11) welches mit der Stange (7) zu deren Verschiebung zusammenwirkt, verbunden ist.

5. Hydraulische Servolenkung nach Anspruch 4, **dadurch gekennzeichnet, dass** das Abtriebsglied (11) ein Zahnrad (12) ist, welches mit einer Lenkmutter(13) oder einer Kugelumlaufmutter (14) die um die Stange (7) angeordnet ist, wirkverbunden ist.

6. Hydraulische Servolenkung nach Anspruch 4, **dadurch gekennzeichnet, dass** das Abtriebsglied (11) ein Ritzel (15) ist, welches mit einer Verzahnung der Stange (7) kämmt.

7. Hydraulische Servolenkung nach Anspruch 1, **dadurch gekennzeichnet, dass** der elektrische Servomotor (6) über ein Überlagerungsgetriebe (17) auf das Abtriebsglied (11) oder über ein Getriebe (18) auf die Stange (7) wirkt.

8. Hydraulische Servolenkung nach einem der Ansprüche 1 bis 7, **dadurch gekennzeichnet, dass** zwei elektrische Servomotoren (6) auf die Stange (7) und/oder auf das Steuerteil (10) des Servoventils (2) wirken.

9. Hydraulische Servolenkung nach einem der Ansprüche 1 bis 8, **dadurch gekennzeichnet, dass** in der hydraulischen Servolenkung (1) die Servozylinder (4) mit elektrischen Servomotoren (6) verschiedener Leistung und Stangen (7) zur Übertragung verschiedener Lenkleistungen miteinander kombinierbar sind.

## Claims

1. Hydraulic power steering system for a vehicle, in particular an electrohydraulic power steering system for a motor vehicle, having a servo valve (2), the relative movement of whose control parts actuates a piston rod (3) of a servo cylinder (4) and changes at least one steering angle (β) of a wheel (5) which is operatively connected to the piston rod (3), and having an electric servo motor (6) which drives a rack (7) with the servo cylinder (4) for the purpose of adjusting the steering angle of the wheel (5) in the same direction, **characterized in that** a steering shaft (16) acts on a control part (10) of the servo valve (2), and the servo valve (2) acts on the rack (7) via a drive output member (11), the rack (7) and the piston rod (3) of the servo cylinder (4) acting, in a parallel arrangement with one another, on an addition member (8) for the purpose of jointly adjusting the steering angle of the wheel (5).

2. Hydraulic power steering system according to Claim 1, **characterized in that** the rack (7) and the piston rod (3) are fixedly or articulatedly connected to the addition member (8).

3. Hydraulic power steering system according to one of Claims 1 or 2, **characterized in that** the electric servo motor (6) acts on a control part (10) of the servo valve (2) via a gearing (9).

4. Hydraulic power steering system according to Claim 3, **characterized in that** the control part (10) is connected to a drive output member (11) which interacts with the rack (7) for the purpose of displacing the latter.

5. Hydraulic power steering system according to Claim 4, **characterized in that** the drive output member (11) is a gearwheel (12) which is operatively connected to a steering nut (13) or a recirculating ball nut (14) which is arranged around the rack (7).

6. Hydraulic power steering system according to Claim 4, **characterized in that** the drive output member (11) is a pinion (15) which meshes with a toothing of the rack (7).

7. Hydraulic power steering system according to Claim 1, **characterized in that** the electric servo motor (6) acts on the drive output member (11) via a superposition gearing (17), or on the rack (7) via a gearing (18).

8. Hydraulic power steering system according to one of Claims 1 to 7, **characterized in that** two electric servo motors (6) act on the rack (7) and/or on the control part (10) of the servo valve (2).

9. Hydraulic power steering system according to one of Claims 1 to 8, **characterized in that**, in the hydraulic power steering system (1), the servo cylinder (4), having electric servo motors (6) of different power, and racks (7) can be combined with one another for the purpose of transmitting different levels of steering power.

## Revendications

1. Direction assistée hydraulique pour un véhicule, en particulier direction assistée électrohydraulique pour un véhicule automobile, comprenant une servovalve (2) dont le mouvement relatif de ses pièces de commande actionne une tige de piston (3) d'un servocylindre (4) et fait varier au moins un angle de direction (β) d'une roue (5) connectée fonctionnellement à la tige de piston (3), et comprenant un servomoteur électrique (6) qui entraîne une tige (7) pour régler l'angle de direction de la roue (5) dans le même sens avec le servocylindre (4), **caractérisée en ce qu'**un arbre de direction (16) agit sur une partie de commande (10) de la servovalve (2) et la servovalve (2) agit avec un organe de sortie (11) sur la tige (7), la tige (7) et la tige de piston (3) du servocylindre (4) agissant dans une disposition parallèle l'une par rapport à l'autre sur un organe d'addition (8) pour réaliser un réglage commun de l'angle de direction de la roue (5).

2. Direction assistée hydraulique selon la revendication 1, **caractérisée en ce que** la tige (7) et la tige de piston (3) sont connectées fixement ou de manière articulée à l'organe d'addition (8).

3. Direction assistée hydraulique selon l'une quelconque des revendications 1 ou 2, **caractérisée en ce que** le servomoteur électrique (6) agit par le biais d'une transmission (9) sur une partie de commande (10) de la servovalve (2).

4. Direction assistée hydraulique selon la revendication 3, **caractérisée en ce que** la partie de commande (10) est connectée à un organe de sortie (11) qui coopère avec la tige (7) pour permettre son déplacement.

5. Direction assistée hydraulique selon la revendication 4, **caractérisée en ce que** l'organe de sortie (11) est une roue dentée (12) qui est en liaison fonctionnelle avec un écrou de direction (13) ou un écrou périphérique conique (14) disposé autour de la tige (7).

6. Direction assistée hydraulique selon la revendication 4, **caractérisée en ce que** l'organe de sortie (11) est un pignon (15) qui s'engrène avec une denture de la tige (7).

7. Direction assistée hydraulique selon la revendication 1, **caractérisée en ce que** le servomoteur électrique (6) agit par le biais d'une transmission superposée (17) sur l'organe de sortie (11) ou par le biais d'une transmission (18) sur la tige (7).

8. Direction assistée hydraulique selon l'une quelconque des revendications 1 à 7, **caractérisée en ce que** deux servomoteurs électriques (6) agissent sur la tige (7) et/ou sur la partie de commande (10) de la servovalve (2).

9. Direction assistée hydraulique selon l'une quelconque des revendications 1 à 8, **caractérisée en ce que** dans la direction assistée hydraulique (1), on peut combiner des servocylindres (4) avec des servomoteurs électriques (6) de différentes puissances et des tiges (7) pour le transfert de différentes puissances de direction.
